# EUROPEAN PATENT APPLICATION

(11) **EP 3 763 570 A1**
(43) Date of publication of application: **13.01.2021**
(21) Application number: 20185420.5
(22) Date of filing: 13.07.2020
(51) Int. Cl.: B60R 3/02

(54) **STEPLADDER FOR A WORK VEHICLE**

(30) Priority: 12.07.2019 IT 201900002316 U
(71) Applicant: CNH Industrial Italia S.p.A., 10135 Torino (IT)
(72) Inventor: Caporale, Davide, 10072 Caselle Torinese (TO) (IT); Loprevite, Mauro, 10099 San Mauro Torinese (TO) (IT)
(74) Representative: CNH Industrial IP Department

(57) **Abstract**

Stepladder (6) for a work vehicle (1) comprising a support (7) configured to carry in a movable manner an extractable portion (8), the extractable portion (8) comprising a main portion (9) carried by support (7) and configured to move between a first closed position into which it is partially contained in support (7) and a second open position into which it is cantilevered outside portion (7), the extractable portion (8) further comprising an auxiliary portion (19) carried in movable manner by main portion (9) and configured to assume a a first closed position into which it is partially contained within main portion (9) and a second open position into which it is placed outside main portion (9), wherein both main and auxiliary portions (9, 19) are configured to define a step.

## Description

### TECHNICAL FIELD

The present innovation concerns a stepladder for a work vehicle, in particular stepladder for an earth-moving machine.

### BACKGROUND OF THE INNOVATION

Work vehicles such as earth moving machines usually comprise a cabin positioned at high level with respect to the ground. Furthermore, such vehicles comprises a chassis, which moves with respect to ground normally via a track belt transmission.

According to the above disposition, it is quite difficult to get into the cabin of such a work vehicle. Therefore, it is common to provide stepladders to facilitate the movement of the user of the vehicle.

A first typology of stepladder is disclosed, for instance, in US3986503 A that discloses a single stepladder that is hinged with respect to vehicle's chassis and that is configured to assume a first closed position and a second opened position. Even if such step is not bulky/do not increase vehicle's lateral size, its positioning is predefined with respect to the chassis. Accordingly, such predefined position could not be the most comfortable for all users.

Another typology of stepladder is disclosed, for instance, in EP3275734 A1 that discloses a stepladder comprising two steps linked by vertical connecting members that are elastically deformable. Even if such stepladder allows a plurality of comfortable support points for different users of the vehicle, such stepladder has a rather complicated/costly layout, it increases the lateral encumbrance of the vehicle and it does not guarantee a stable and safe support for the user, indeed it moves.

In view of the above, the need is felt to provide stepladders for work vehicles that are compact, comfortable/versatile to users and economic.

An aim of the present innovation is to satisfy the above-mentioned needs.

### SUMMARY OF THE INNOVATION

The aforementioned aim is reached by a stepladder for a work machine, as claimed in the appended set of claims.

### BRIEF DESCRIPTION OF DRAWINGS

For a better understanding of the present innovation, a preferred embodiment is described in the following, by way of a non-limiting example, with reference to the attached drawings wherein:
- Figure 1 is a perspective view illustrating a portion of a work vehicle provided with a stepladder according to the innovation;
- Figure 2 is a perspective view illustrating a stepladder according to the innovation;
- Figures 3A-3B are front perspective views of the stepladder of figure 2 in a first and a second operational positions; and
- Figures 4A-4B are rear perspective views of the stepladder of figure 2 in further first and second operational positions.

### DETAILED DESCRIPTION OF THE INNOVATION

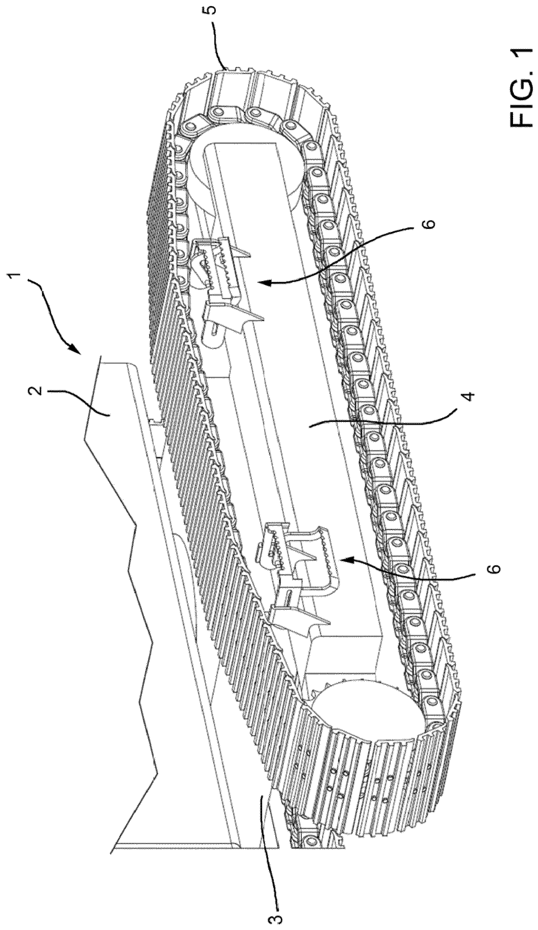

Figure 1 shows a work vehicle 1, e.g. an earth moving machine, comprising a cabin 2 carried, preferably in a turntable way, by a chassis 3. According to the described embodiment, chassis 3 is configured to move on ground thanks to a track band transmission 5 carried around an undercarriage 4 fixedly carried by chassis 3.

Vehicle 1 comprises, preferably carried by undercarriage 4 inside the loop defined by the track band transmission 5, a stepladder 6 according to the innovation. Advantageously, work vehicle 1 may comprise more than a single stepladder 6, in the disclosed embodiment it comprises a front and a rear stepladders 6.

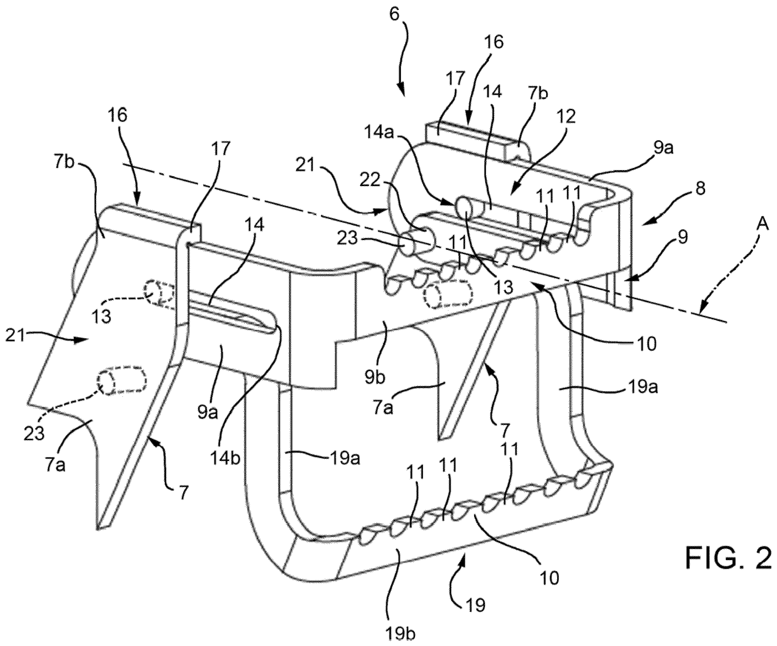

Making reference to figure 2, stepladder 6 comprises at least a support 7 configured to be fixed to a portion of the vehicle fixed to chassis 3, i.e. to undercarriage 4 as disclosed, and an extractable portion 8 carried in movable manner by support 7. In greater particular, stepladder 6 comprises a right and a left supports 7 configured to carry extractable portion 8 within the space defined between themselves.

In greater particular, each support 7 comprises a base portion 7a configured to be fixed to chassis 3 and a top portion 7b configured to carry extractable portion 8. Preferably, support 7 comprises a single plate-wall element defining the aforementioned base and top portions 7a, 7b, and that it is faced to the opposite plate-wall element defining the other support 7. More preferably, such plate-wall element are equally spaced one with respect to the other about an axis A, perpendicular to undercarriage 4. Advantageously, supports 7 are made in metallic material and may be fixed to chassis 3 thanks to any known fixation device, e.g. bolts, welding etc.

Extractable portion 8 essentially comprises a main portion 9 that is carried in the above-mentioned movable manner with respect to supports 7. In particular, main portion 9 comprises a pair of lateral walls 9a and a front wall 9b, connected together and preferably realized as one piece, more preferably in metal material. In more detail, lateral and front walls 9a, 9b are substantially plate-wall elements having a substantially rectangular cross section.

Optionally, front wall 9b is provided with a grip portion 10 configured to allow a safe and antislip step for a user using the stepladder 6. In detail, grip portion 10 may comprise a plurality of teeth 11 realized in a top edge of front wall 9b. Lateral walls 9a are faced one with respect to the other and equally spaced with respect to axis A at a distance so that they can cooperate with supports 7 as described hereunder.

The movement of extractable portion 8 is a translational movement, which is advantageously linear and realized along direction of axis A thanks to a sliding connection 12 realized between each support 7 and the respective lateral wall 9a.

Preferably sliding connection 12 comprises a pin 13 carried by one between support 7 or lateral wall 9a configured to slide in a guide 14 realized in the other of the aforementioned elements. In the described embodiment, pin 13 is realized in top portion 7b of support 7 while guide 14 is realized in lateral wall 9a.

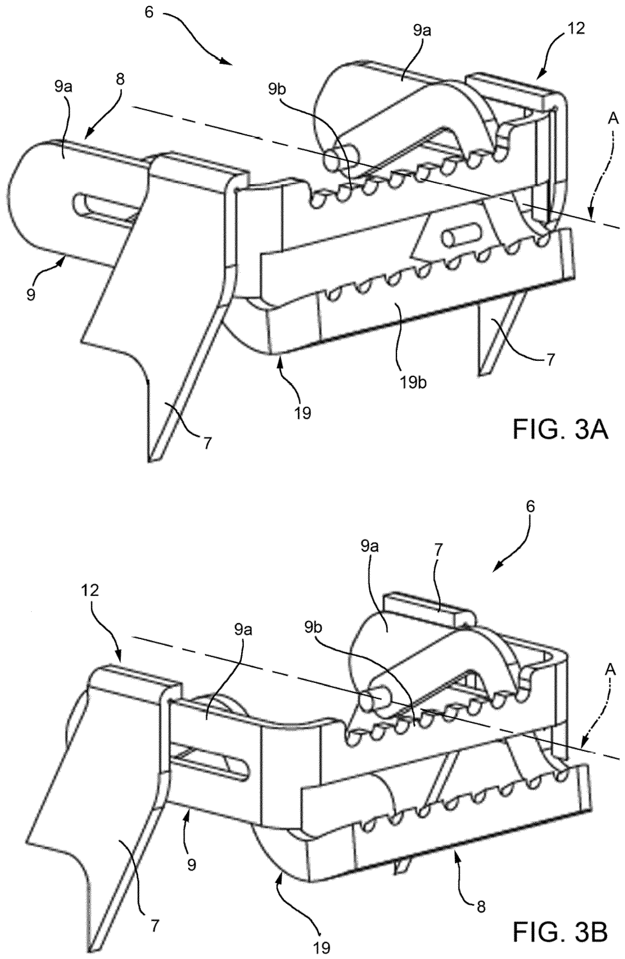

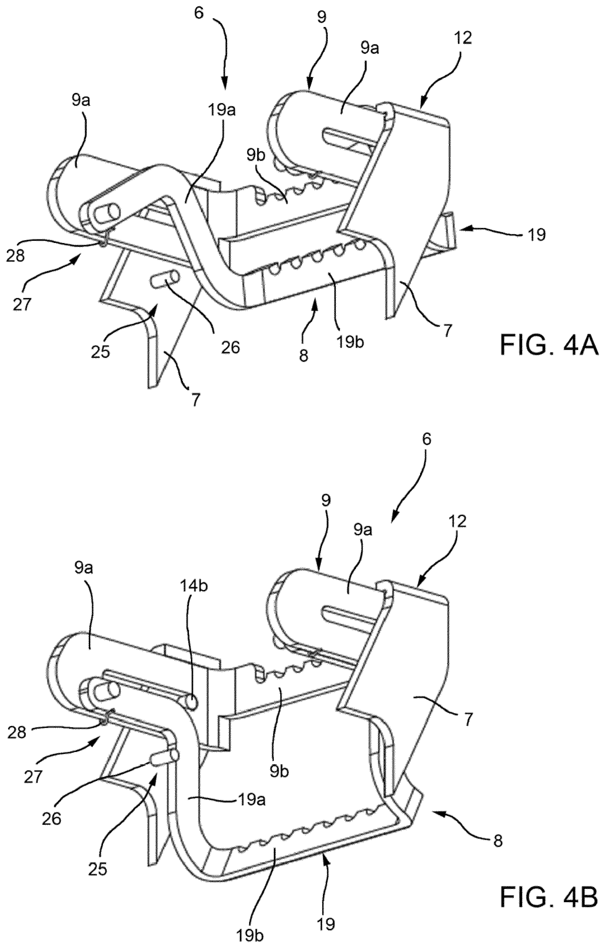

Preferably, lateral guide 14 has a substantially rectangular shape extending along axis A and comprising a rear terminal edge 14a and a front terminal edge 14b. Pin 13 is configured to slide:
- from rear terminal edge 14a (figure 2) into which extractable portion 8 is extracted with respect to supports 7, i.e. lateral walls 9a protrude laterally with respect to chassis 3,
- to a front terminal edge 14b (see figures 3A, 4A and 4B) into which extractable portion 8 is placed inside the space defined by supports 7, i.e. lateral walls 9a do not protrude laterally with respect to chassis 3.

Obviously, the aforementioned movement may also be realized vice versa, i.e. from front to rear terminal edges 14b, 14a.

Sliding connection 12 may further comprise anti-overturning means 16 configured to avoid a rotation of extractable portion 8 about the above-disclosed pin 13. In particular, such anti-overturning means 16 may comprise an lip-shaped edge 17 extending from top portion 7b of the related support 7 perpendicularly towards the opposite support 7.

Lip-shaped edge 17 extends laterally along all lateral extension of support 7 and it is configured to cooperated at contact with a top edge of lateral wall 9a thereby avoiding a rotation of this latter around pin 13.

Extractable portion 8 further comprises an auxiliary portion 19 carried in movable manner by main portion 9. In particular, such auxiliary portion 19 comprises a pair of lateral walls 19a and a front wall 19b, connected together and preferably realized as one piece, more preferably in metal material. In more detail, lateral and front walls 19a, 19b are substantially plate-wall elements having a substantially rectangular cross section.

Optionally, front wall 19b is provided with a grip portion 10 configured to allow a safe and antislip step for a user using the stepladder 6. In detail, grip portion 10 may comprise a plurality of teeth 11 realized in a top edge of front wall 19b. Lateral walls 9a are instead faced one with respect to the other and equally spaced with respect to axis A at a distance so that they can cooperate with main lateral walls 9a of main portion 9 as described hereinafter.

Preferably, lateral walls 19a of auxiliary portion 19 have a substantially L-shaped shape, i.e. comprises two linear segments, a longer and a shorter segment, connected perpendicularly together and preferably realized as one piece.

Auxiliary portion 19 is carried in a movable manner so that it can reach a first, closed, position into which it is placed substantially inside the space surrounded by main portion 9 and a second, opened, position into which it is spaced with respect to main portion 9.

According to the described embodiment, auxiliary portion 19 is carried pivotally with respect to main portion 9 so that in the first position front portion 19a is placed substantially vertically under front portion 9a of main portion (see figures 3A, 3B, 4A), or in a rear portion with respect to front portion 9a along axis A(alternative not shown).

According to the described configuration, a pivotable connection 21 is realized between main and auxiliary portion 9, 19, in particular thanks to hole 22 realized in one between these latter configured to house in a sliding manner a pin 23 realized in the other of these latter. Preferably, pin 23 is carried by lateral wall of main portion 9 while hole 22 is realized at an extremity of L-shaped lateral walls 19a of auxiliary portion, i.e. into the low-length segment.

Therefore, low-length segment of L-shaped lateral walls 19a is placed parallel to lateral wall 9a of main portion 9, preferably with both lower edges substantially at the same height, when auxiliary portion is in its second, opened, position.

As shown in figures 3A, 4A and 4B stepladder 6 further comprises stop means 25 configured to limit the movement of auxiliary portion 19 with respect to main portion 9 of extractable portion 8. In particular, such stop means 25 may comprise a pin 26 fixedly carried by lateral support 7, preferably realized between base and top portions 7a, 7b and extending perpendicularly with respect to its support 7 towards the opposite. Such pin 26 is configured to cooperate at contact with auxiliary portion to avoid an excessive movement, i.e. pivoting, of this latter around pin 23.

Furthermore, as shown in figures 3A-B and 4A-B, stepladder 6 further comprises elastic means 27 configured to maintain auxiliary portion in its first position with respect to main portion 9. According to the described embodiment, elastic means 27 comprises a spring 28 carried by main portion 9 and configured to exert a force on auxiliary portion 19 so that, if no force is applied on front portion 19b, it is maintained into its first position. If a force, e.g. the force of a man pushing with a foot for jumping on the ladder, is applied to front portion 19b, spring 28 is designed so that it will surrender, thereby allowing the movement of auxiliary portion from first to second position.

The operation of the above-described stepladder 6 according to the innovation is described hereinafter referring to figures 3A- B and 4A- B.

Figures 3A, 4A show a totally closed and retracted stepladder 6 configuration. In such configuration, the lateral space occupied by stepladder 6 is minimal and it is contained substantially all inside with respect to the loop defined by track band transmission 5. In Such configuration may be useful when the work vehicle 1 is working and there is no peculiar need to the user to enter in the cabin; the main need in such configuration is to provide the minimal occupied space, i.e. allowing, if necessary, a tall user to use the step, with a limited length of shoes (since the main portion 9 is not totally cantilevered with respect to supports 7).

Figure 3B shows stepladder 6 in a first intermediate extended configuration. In such configuration, the main portion 9 is totally extracted with respect to supports 7, i.e. pin 13 cooperates at contact with edge 14a of guide 14, while auxiliary portion 19 is still in its closed configuration, i.e. wherein front wall 19a is placed just under/rear with respect to front wall 9a of main portion 9. Such configuration may be useful for allowing a tall user to reach cabin 2 of the vehicle while allowing a great width of shoes of the track band, since the step defined by grip portion 10 of main portion 9 is cantilevered outside with respect to chassis 3 and allows the user to use this latter as step, i.e. with a bigger width of shoes of the track band.

Figure 4B shows stepladder 6 in a second intermediate opened configuration. In such configuration, the main portion 9 is in its closed position with respect to supports 7, i.e. pin 13 cooperates at contact with edge 14b of guide 14, while auxiliary portion 19 is in its opened configuration, i.e. wherein front wall 19a is spaced with respect to front wall 9a of main portion 9. Such configuration may be useful for allowing a short user to reach cabin 2 of the vehicle, while, at the same time, maintaining a low level of lateral encumbrance.

Figure 2 shows a totally opened stepladder 6 configuration. In such configuration, the main portion 9 is totally extracted with respect to supports 7, i.e. pin 13 cooperates at contact with edge 14a of guide 14, and also auxiliary portion 19 is in its opened configuration, i.e. wherein front wall 19a is spaced with respect to front wall 9a of main portion 9. Such configuration may be useful for furnishing a plurality of stables and different heights steps to the user, e.g. when the vehicle is standstill, allowing tall and short users, with different width of shoes of the track band, to enter into the cabin.

In view of the foregoing, the advantages of a stepladder 6 according to the innovation are evident.

First, the disclosed stepladder 6 allows a plurality of comfortable supports 7 to any user which has to access to the cabin 2 of vehicle 1.

Furthermore, such support points, given by front walls 9a, 19a of main and auxiliary portions 9, 19, can be placed in a rest position which do not increases lateral encumbrance of the vehicle.

Moreover, the proposed layout can be realized in an economic way by using simple mechanical elements such as hinges or slides.

Again, the proposed stepladder 6 may be used on different vehicles layout, avoiding the use of additional steps, thereby further increasing cost savings during manufacturing of the work vehicle.

It is clear that modifications can be made to the described stepladder 6 which do not extend beyond the scope of protection defined by the claims.

For example, the shape of main and auxiliary portions 9, 19 walls or of supports 7 may be varied and, clearly, main portion 9 may slide in any intermediate position between the totally "closed" and the "opened" position of the latter.

Similarly, sliding means 12, stop means 25 or elastic means 27 may be substituted by equivalent means.

Furthermore, the described relative movements of main portion 9 with respect to supports 7 or of auxiliary portion 19 with respect to main portion 9 can be varied in typology and dimensions according to the vehicles into which the stepladder has to be applied.

## Claims

1. Stepladder (6) for a work vehicle (1) comprising a support (7) configured to carry in a movable manner an extractable portion (8), said extractable portion (8) comprising a main portion (9) carried by said support (7) and configured to move between a first closed position into which it is partially contained in said support (7) and a second open position into which it is cantilevered outside said portion (7), said extractable portion (8) further comprising an auxiliary portion (19) carried in movable manner by said main portion (9) and configured to assume a a first closed position into which it is partially contained within said main portion (9) and a second open position into which it is placed outside said main portion (9), wherein both main and auxiliary portions (9, 19) are configured to define a step.

2. Stepladder according to claim 1, wherein said main portion (9) is carried by said support (7) in a translational way.

3. Stepladder according to claim 1 or 2, wherein said auxiliary portion (19) is pivoted with respect to said main portion (9).

4. Stepladder according to any of the preceding claims, wherein said main and auxiliary portions (9, 19) each comprises a pair of lateral walls (9a, 19a) and a front wall (9b, 19b), said front walls (9b, 19b) defining respective steps of said stepladder (6).

5. Stepladder according to claim 4, wherein said steps comprises a grip portion (10).

6. Stepladder according to claim 5, wherein said grip portion (10) comprises a plurality of teeth (11).

7. Stepladder according to any of claims 2 to 6, comprising sliding means (12) configured to allow the translational movement of said main portion (9) with respect to said support (7).

8. Stepladder according to claim 7, wherein said sliding means (12) comprise a pin (13) carried by one between support (7) and main portion (9) suitable for sliding into a guide (14) realized in the other between support (7) and main portion (9) .

9. Stepladder according to claim 7 or 8, wherein said sliding means (12) further comprise anti-overturning means (16) configured to avoid a rotation of main portion (9) with respect to said support (7).

10. Stepladder according to any of claims 3 to 9, further comprising stop means (25) configured to avoid a excessive rotation of said auxiliary portion (19) with respect to said main portion (9).

11. Stepladder according to any of the preceding claims, further comprising elastic means (27) configured to exert a force configured to maintain said auxiliary portion (19) in its closed position.

12. Stepladder according to any of the preceding claims, wherein said support (7) comprises a pair of plate-wall elements equally spaced with respect to a common axis (A), said extractable portion (8) being house within said space defined by said pair of plate-wall elements.

13. Vehicle comprising a chassis (3) and a cabin (2) carried by said chassis (3), this latter further fixedly carrying a stepladder (6) according to any of the preceding claims.
